# EUROPEAN PATENT APPLICATION

(11) **EP 4 492 885 A1**
(43) Date of publication of application: **15.01.2025**
(21) Application number: 22930242.7
(22) Date of filing: 08.03.2022
(51) Int. Cl.: H04W 68/02, H04W 52/02, H04W 28/02

(54) **METHOD AND APPARATUS FOR DETERMINING WAKE-UP SIGNAL CYCLE, AND DEVICE AND STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Gunzelmann, Rainer
(86) International application number: PCT/CN2022/079751
(87) International publication number: WO 2023/168596

(57) **Abstract**

Provided in the present disclosure are a method and apparatus for determining a wake-up signal (WUS) cycle, and a device and a storage medium. The method is executed by a user equipment, and comprises: in response to a user equipment having received N kinds of indication information, and on the basis of one of the N kinds of indication information, determining a cycle in which the user equipment detects a WUS, wherein the N kinds of indication information are all used for indicating WUS cycles, and N is a positive integer greater than 1. By using the method, it can be ensured that a user equipment can detect a WUS normally.

## Description

### TECHNICAL FIELD

The present disclosure relates to the technical field of wireless communication, in particular to a method and an apparatus for determining a wake up signal cycle, and a device, and a storage medium.

### BACKGROUND

A low-power wake up signal (WUS) is introduced to R18. A user equipment detects the WUS by using a separate receiver. The user equipment needs to use a main transceiver to process downlink and uplink data normally. If the user equipment receives the WUS for indicating wake up, the main receiver may be turned on to receive and process a downlink signal; and if the user equipment does not receive the WUS or the WUS indicates not to wake up, the user equipment may keep the main receiver in a sleep state.

### SUMMARY

For this propose, the present disclosure provides a method and an apparatus for determining a wake up signal cycle, a device, and a storage medium.

According to a first aspect of an embodiment of the present disclosure, provided is a method for determining a wake up signal cycle, which is performed by a user equipment, and includes:
in response to the user equipment receiving N kinds of indication information, determining a cycle in which the user equipment detects a WUS based on one of the N kinds of indication information;
in which the N kinds of indication information are all used for indicating WUS cycles, where N is a positive integer greater than 1.

In an implementation, determining the cycle in which the user equipment detects the WUS based on one of the N kinds of indication information includes:
determining that the cycle in which the WUS is detected is a maximum value in the WUS cycles indicated by the N kinds of indication information.

In an implementation, determining the cycle in which the user equipment detects the WUS based on one of the N kinds of indication information includes:
determining that the cycle in which the WUS is detected is a minimum value in the WUS cycles indicated by the N kinds of indication information.

In an implementation, determining the cycle in which the user equipment detects the WUS based on one of the N kinds of indication information includes:
determining the cycle in which the WUS is detected based on first indication information in the N kinds of indication information;
in which, the first indication information is indication information having a highest priority in the N kinds of indication information.

In an implementation, the method further includes:
sending capability information of the user equipment to a network device, wherein the capability information includes a cycle which is recommended by the user equipment and in which the WUS is detected.

In an implementation, determining the cycle in which the user equipment detects the WUS based on one of the N kinds of indication information includes:
determining that the cycle in which the WUS is detected is the cycle which is recommended by the user equipment in response to the cycle which is recommended by the user equipment being included in the WUS cycles indicated by the N kinds of indication information.

In an implementation, determining the cycle in which the user equipment detects the WUS based on one of the N kinds of indication information includes:
determining that the cycle in which the WUS is detected is a minimum value in a WUS cycle or WUS cycles indicated by the at least one kind of indication information in response to the cycle which is recommended by the user equipment being not included in the WUS cycles indicated by the N kinds of indication information, and the WUS cycle or WUS cycles indicated by at least one kind of indication information in the N kinds of indication information being longer than the cycle which is recommended by the user equipment.

In an implementation, determining the cycle in which the user equipment detects the WUS based on one of the N kinds of indication information includes:
determining that the cycle in which the WUS is detected is a maximum value in a WUS cycle or WUS cycles indicated by the at least one kind of indication information in response to the cycle which is recommended by the user equipment being not included in the WUS cycles indicated by the N kinds of indication information, and the WUS cycle or WUS cycles indicated by at least one kind of indication information in the N kinds of indication information being shorter than the cycle which is recommended by the user equipment.

In an implementation, the N kinds of indication information include at least two kinds of:
indication information transmitted by a network device through a system broadcast message and used for configured WUS cycles;
indication information transmitted by a network device through a user equipment specific signaling and used for configured WUS cycles; or
indication information used for WUS cycles configured by a core network.

In an implementation, priorities of the N kinds of indication information follow a following order from high to low: the indication information transmitted by the network device through the user equipment specific signaling and used for the configured WUS cycles, the indication information used for the WUS cycles configured by the core network, and the indication information transmitted by the network device through the system broadcast message and used for the configured WUS cycles.

According to a second aspect of an embodiment of the present disclosure, provided is a method for determining a wake up signal cycle, which is performed by a network device, and includes:
in response to N kinds of indication information being sent to a user equipment, determining a cycle in which the user equipment detects a WUS based on one of the N kinds of indication information;
in which the N kinds of indication information are all used for indicating WUS cycles, and N is a positive integer greater than 1.

In an implementation, determining the cycle in which the user equipment detects the WUS based on one of the N kinds of indication information includes:
determining that the cycle in which the WUS is detected is a maximum value in the WUS cycles indicated by the N kinds of indication information.

In an implementation, determining the cycle in which the user equipment detects the WUS based on one of the N kinds of indication information includes:
determining that the cycle in which the WUS is detected is a minimum value in the WUS cycles indicated by the N kinds of indication information.

In an implementation, determining the cycle in which the user equipment detects the WUS based on one of the N kinds of indication information includes:
determining the cycle in which the WUS is detected based on first indication information in the N kinds of indication information;
in which the first indication information is indication information having a highest priority in the N kinds of indication information.

In an implementation, the method further includes:
receiving capability information sent by the user equipment, in which the capability information includes a cycle which is recommended by the user equipment and in which the WUS is detected.

In an implementation, determining the cycle in which the user equipment detects the WUS based on one of the N kinds of indication information includes:
determining that the cycle in which the WUS is detected is the cycle which is recommended by the user equipment in response to the cycle which is recommended by the user equipment being comprised in the WUS cycles indicated by the N kinds of indication information.

In an implementation, determining the cycle in which the user equipment detects the WUS based on one of the N kinds of indication information includes:
determining that the cycle in which the WUS is detected is a minimum value in a WUS cycle or WUS cycles indicated by at least one kind of indication information in response to the cycle which is recommended by the user equipment being not comprised in the WUS cycles indicated by the N kinds of indication information, and the WUS cycle or WUS cycles indicated by the at least one kind of indication information in the N kinds of indication information being longer than the cycle which is recommended by the user equipment.

In an implementation, determining the cycle in which the user equipment detects the WUS based on one of the N kinds of indication information includes:
determining that the cycle in which the WUS is detected is a maximum value in a WUS cycle or WUS cycles indicated by at least one kind of indication information in response to the cycle which is recommended by the user equipment being not comprised in the WUS cycles indicated by the N kinds of indication information, and the WUS cycle or WUS cycles indicated by the at least one kind of indication information in the N kinds of indication information being shorter than the cycle which is recommended by the user equipment.

In an implementation, the N kinds of indication information include at least two kinds of:
indication information transmitted by a network device through a system broadcast message and used for configured WUS cycles;
indication information transmitted by a network device through a user equipment specific signaling and used for configured WUS cycles; or
indication information used for WUS cycles configured by a core network.

In an implementation, priorities of the N kinds of indication information follow a following order from high to low: the indication information transmitted by the network device through the user equipment specific signaling and used for the configured WUS cycles, the indication information used for the WUS cycles configured by the core network, and the indication information transmitted by the network device through the system broadcast message and used for the configured WUS cycles.

According to a third aspect of an embodiment of the present disclosure, provided is an apparatus for determining a wake up signal cycle, which is applied to a user equipment, and includes:
a processing module configured to, in response to the user equipment receiving N kinds of indication information, determine a cycle in which the user equipment detects a WUS based on one of the N kinds of indication information;
in which the N kinds of indication information are all used for indicating WUS cycles, where N is a positive integer greater than 1.

According to a fourth aspect of an embodiment of the present disclosure, provided is an apparatus for determining a wake up signal cycle, which is applied to a network device, and includes:
a processing module configured to, in response to N kinds of indication information being sent to a user equipment, determine a cycle in which the user equipment detects a WUS based on one of the N kinds of indication information;
in which the N kinds of indication information are all used for indicating WUS cycles, where N is a positive integer greater than 1.

According to a fifth aspect of an embodiment of the present disclosure, provided is a mobile terminal, including:
a processor; and
a memory configured to store executable instructions for the processor;
wherein the processor is configured to execute the executable instructions in the memory, to implement steps of the above-mentioned method for determining the WUS cycle.

According to a sixth aspect of an embodiment of the present disclosure, provided is a network side device, including:
a processor; and
a memory configured to store executable instructions for the processor;
wherein the processor is configured to execute the executable instructions in the memory, to implement steps of the above-mentioned method for determining the WUS cycle.

According to a seventh aspect of an embodiment of the present disclosure, provided is a non-temporary computer-readable storage medium, having executable instructions stored thereon, and the executable instructions, when executed by a processor, implementing steps of the above-mentioned method for determining the WUS cycle.

The technical solutions provided in embodiments of the present disclosure can include the following beneficial effects.

By using the method in an embodiment of the present disclosure, when receiving a plurality of kinds of indication information, the user equipment determines that one of the WUS cycles indicated by the plurality of kinds of indication information is the cycle in which the user equipment detects the WUS. It is ensured that the user equipment can detect the WUS normally.

It should be understood that the above general description and the following detailed description are only illustrative and explanatory, and can not limit the present disclosure.

### BRIEF DESCRIPTION OF THE DRAWINGS

The accompanying drawings described herein are provided for further understanding embodiments of the present disclosure, and constitute one part of the present application. The illustrative embodiments and descriptions thereof in embodiments of the present disclosure are intended to explain embodiments of the present disclosure, rather than to constitute improper limitations on embodiments of the present disclosure, in which:
the accompanying drawings, which are incorporated in and constitute a part of the description, illustrate embodiments consistent with embodiments of the present disclosure and serve to explain principles of embodiments of the present disclosure together with the description.
FIG 1 is a flowchart of a method for determining a WUS cycle shown according to an exemplary embodiment.
FIG 2 is a flowchart of a method for determining a WUS cycle shown according to an exemplary embodiment.
FIG 3 is a flowchart of a method for determining a WUS cycle shown according to an exemplary embodiment.
FIG 4 is a flowchart of a method for determining a WUS cycle shown according to an exemplary embodiment.
FIG 5 is a flowchart of a method for determining a WUS cycle shown according to an exemplary embodiment.
FIG 6 is a flowchart of a method for determining a WUS cycle shown according to an exemplary embodiment.
FIG 7 is a flowchart of a method for determining a WUS cycle shown according to an exemplary embodiment.
FIG 8 is a flowchart of a method for determining a WUS cycle shown according to an exemplary embodiment.
FIG 9 is a flowchart of a method for determining a WUS cycle shown according to an exemplary embodiment.
FIG 10 is a flowchart of a method for determining a WUS cycle shown according to an exemplary embodiment.
FIG 11 is a flowchart of a method for determining a WUS cycle shown according to an exemplary embodiment.
FIG 12 is a flowchart of a method for determining a WUS cycle shown according to an exemplary embodiment.
FIG 13 is a flowchart of a method for determining a WUS cycle shown according to an exemplary embodiment.
FIG 14 is a flowchart of a method for determining a WUS cycle shown according to an exemplary embodiment.
FIG 15 is a flowchart of a method for determining a WUS cycle shown according to an exemplary embodiment.
FIG 16 is a flowchart of a method for determining a WUS cycle shown according to an exemplary embodiment.
FIG 17 is a block diagram of an apparatus for determining a WUS cycle shown according to an exemplary embodiment.
FIG 18 is a block diagram of an apparatus for determining a WUS cycle shown according to an exemplary embodiment.
FIG 19 is a structural diagram of an apparatus for determining a WUS cycle shown according to an exemplary embodiment.
FIG 20 is a structural diagram of an apparatus for determining a WUS cycle shown according to an exemplary embodiment.

### DETAILED DESCRIPTION

Embodiments of the present disclosure will be further described now in conjunction with the accompanying drawings and specific implementations.

Exemplary embodiments will be described in detail herein, examples of which are illustrated in the accompanying drawings. When the following description refers to the accompanying drawings, the same numbers in different accompanying drawings represent the same or similar elements unless otherwise indicated. The implementations described in the following exemplary embodiments do not represent all implementations consistent with the present disclosure. On the contrary, they are only examples of an apparatus and a method consistent with some aspects of the present disclosure as detailed in the appended claims.

It should be noted that an embodiment of the present disclosure can include a plurality of steps; for facilitating description, these steps are numbered; however, these numbers do not limit execution slots and an execution order among the steps; and these steps can be performed in any order which is not limited in the embodiments of the present disclosure.

In the description of the present application, words such as "first", "second" and "third" are only for the purpose of distinguishing description, but cannot be understood as indicating or implying relative importance, and cannot be understood as indicating or implying an order, either. "a plurality of" refers to two or more.

"And/or" describes an association relationship among associated objects and denotes that three relationships can exist. For example, A and/or B can denote three situations that A exists alone; A and B exist at the same time; and B exists alone.

A user equipment may receive a plurality of the same or different wake up signal cycles (WUS cycles), such as 16 frames and 32 frames, etc., configured in a plurality of manners. In this case, the user equipment needs to determine a cycle adopted when detecting a WUS.

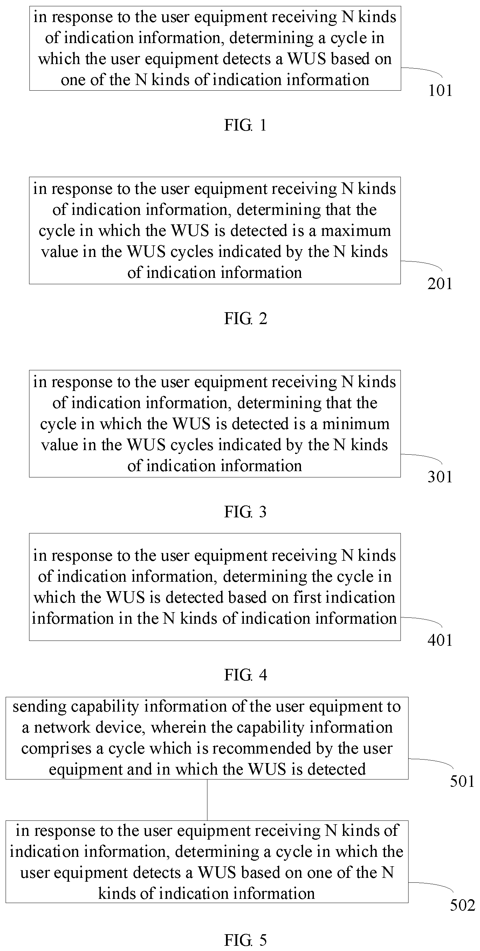

An embodiment of the present disclosure provides a method for determining a WUS cycle, which is applied to a user equipment. FIG 1 is a flowchart of a method for determining a WUS cycle shown according to an exemplary embodiment. As shown in FIG 1, the method includes the following step.

At step 101, in response to the user equipment receiving N kinds of indication information, a cycle in which the user equipment detects a WUS is determined based on one of the N kinds of indication information;
in which the N kinds of indication information are all used for indicating WUS cycles, where N is a positive integer greater than 1.

In an implementation, in a scenario that the user equipment receives a plurality of kinds of indication information, the cycle in which the user equipment detects the WUS is determined based on one of the plurality of kinds of indication information. Each of the plurality of kinds of indication information indicates the WUS cycle. The WUS cycles indicated by the plurality of kinds of indication information can be the same or different.

Illustratively, the indication information described herein can indicate a WUS cycle configured by a network device or a WUS cycle configured by a core network.

In the above-mentioned implementation, when receiving the plurality of kinds of indication information, the user equipment determines that one of the WUS cycles indicated by the plurality of kinds of indication information is the cycle in which the user equipment detects the WUS. It is ensured that the user equipment can detect the WUS normally.

An embodiment of the present disclosure provides a method for determining a WUS cycle, which is applied to a user equipment. FIG 2 is a flowchart of a method for determining a WUS cycle shown according to an exemplary embodiment. As shown in FIG 2, the method includes the following step.

At step 201, in response to the user equipment receiving N kinds of indication information, it is determined that the cycle in which the WUS is detected is a maximum value in the WUS cycles indicated by the N kinds of indication information;
in which the N kinds of indication information are all used for indicating WUS cycles, where N is a positive integer greater than 1.

In an implementation, in a scenario that the user equipment receives a plurality of kinds of indication information, the user equipment determines that the cycle in which the user equipment detects the WUS is the maximum value in the WUS cycles indicated by the plurality of kinds of indication information. When WUS cycles indicated by at least two kinds of indication information are the same, there may be a situation that the WUS cycles indicated by the at least two kinds of indication information are both the maximum values, at this point, the cycle in which the user equipment detects the WUS can be determined based on one of the at least two kinds of indication information.

In the above-mentioned implementation, when receiving the plurality of kinds of indication information, the user equipment determines that the maximum value in the WUS cycles indicated by the plurality of kinds of indication information is the cycle in which the user equipment detects the WUS, that is, a WUS cycle which is long as much as possible is selected, by which energy consumption of the user equipment can be reduced as much as possible.

An embodiment of the present disclosure provides a method for determining a WUS cycle, which is applied to a user equipment. FIG 3 is a flowchart of a method for determining a WUS cycle shown according to an exemplary embodiment. As shown in FIG 3, the method includes the following step.

At step 301, in response to the user equipment receiving N kinds of indication information, it is determined that the cycle in which the WUS is detected is a minimum value in the WUS cycles indicated by the N kinds of indication information;
in which the N kinds of indication information are all used for indicating WUS cycles, where N is a positive integer greater than 1.

In an implementation, in a scenario that the user equipment receives a plurality of kinds of indication information, the user equipment determines that the cycle in which the user equipment detects the WUS is the minimum value in the WUS cycles indicated by the plurality of kinds of indication information. When WUS cycles indicated by at least two kinds of indication information are the same, there may be a situation that the WUS cycles indicated by the at least two kinds of indication information are both the minimum values, at this point, the cycle in which the user equipment detects the WUS can be determined based on one of the at least two kinds of indication information.

In the above-mentioned implementation, when receiving the plurality of kinds of indication information, the user equipment determines that the minimum value in the WUS cycles indicated by the plurality of kinds of indication information is the cycle in which the user equipment detects the WUS, that is, a WUS cycle which is short as much as possible is selected, by which a delay of information transmission can be shortened as much as possible.

An embodiment of the present disclosure provides a method for determining a WUS cycle, which is applied to a user equipment. FIG 4 is a flowchart of a method for determining a WUS cycle shown according to an exemplary embodiment. As shown in FIG 4, the method includes the following step.

At step 401, in response to the user equipment receiving N kinds of indication information, the cycle in which the WUS is detected is determined based on first indication information in the N kinds of indication information;
in which the first indication information is indication information having a highest priority in the N kinds of indication information, the N kinds of indication information are all used for indicating WUS cycles, where N is a positive integer greater than 1.

In an implementation, in a scenario that the user equipment receives a plurality of kinds of indication information, the first indication information in the plurality of kinds of indication information is determined, and the cycle in which the user equipment detects the WUS is determined based on the first indication information. The plurality of kinds of indication information all indicates the WUS cycles, and in the plurality of kinds of indication information, a priority of the first indication information is highest.

Illustratively, the plurality of kinds of indication information can include at least two kinds of indication information of: indication information transmitted by a network device through a system broadcast message and used for configured WUS cycles; indication information transmitted by a network device through a user equipment specific signaling and used for configured WUS cycles; and indication information used for WUS cycles configured by a core network. Further illustratively, the first indication information can be determined based on priorities of the indication information listed as above.

In the above-mentioned implementation, when receiving the plurality of kinds of indication information, the user equipment determines the cycle in which the user equipment detects the WUS based on the indication information having the highest priority. The user equipment can detect the WUS according to a configuration preferred by a network side.

An embodiment of the present disclosure provides a method for determining a WUS cycle, which is applied to a user equipment. FIG 5 is a flowchart of a method for determining a WUS cycle shown according to an exemplary embodiment. As shown in FIG 5, the method includes the following step.

At step 501, capability information of the user equipment is sent to a network device, in which the capability information includes a cycle which is recommended by the user equipment and in which a WUS is detected.

At step 502, in response to the user equipment receiving N kinds of indication information, a cycle in which the user equipment detects a WUS is determined based on one of the N kinds of indication information;
in which the N kinds of indication information are all used for indicating WUS cycles, where N is a positive integer greater than 1.

In an implementation, the user equipment sends the capability information thereof to the network device, and the capability information includes the cycle which is recommended by the user equipment and in which the WUS is detected. In a scenario that the user equipment receives a plurality of kinds of indication information, the cycle in which the user equipment detects the WUS is determined based on one of the N kinds of indication information. Illustratively, the cycle which is recommended by the user equipment and in which the WUS is detected is 32 frames.

It should be noted that the user equipment can report the capability information thereof to the network device before receiving the plurality of kinds of indication information; or report the capability information thereof to the network device after receiving the plurality of kinds of indication information. In this implementation, an order of receiving the plurality of kinds of indication information and reporting the capability information thereof by the user equipment is not limited.

In the above-mentioned implementation, in a case that the user equipment receives the plurality of kinds of indication information and reports the cycle which is recommended by the user equipment and in which the WUS is detected to the network device, on the basis of referring to the cycle which is recommended by the user equipment and in which the WUS is detected, the cycle in which the WUS is detected is determined based on one of the plurality of kinds of indication information. The capability of the user equipment itself can be referenced when the cycle in which the WUS is detected is determined, thus the determined WUS cycle is matched with the capability of the user equipment as much as possible.

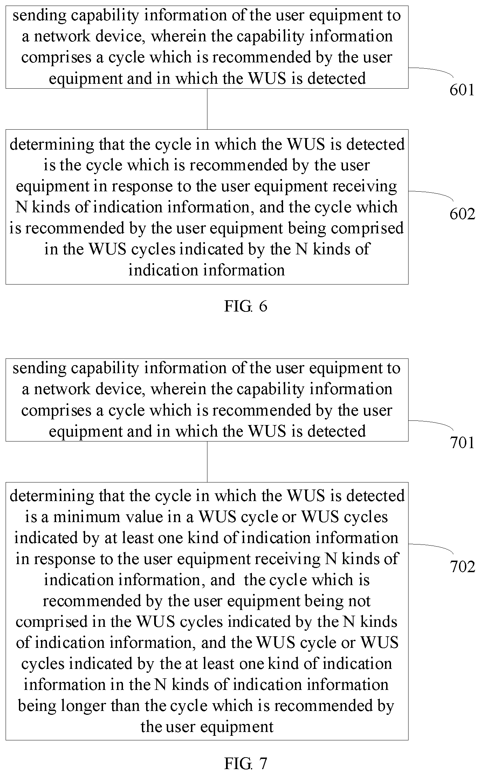

An embodiment of the present disclosure provides a method for determining a WUS cycle, which is applied to a user equipment. FIG 6 is a flowchart of a method for determining a WUS cycle shown according to an exemplary embodiment. As shown in FIG 6, the method includes the following steps.

At step 601, capability information of the user equipment is sent to a network device, in which the capability information includes a cycle which is recommended by the user equipment and in which a WUS is detected.

At step 602, in response to the user equipment receiving N kinds of indication information, the cycle which is recommended by the user equipment being included in the WUS cycles indicated by the N kinds of indication information, it is determined that the cycle in which the WUS is detected is the cycle which is recommended by the user equipment;
in which the N kinds of indication information are all used for indicating WUS cycles, where N is a positive integer greater than 1.

In an implementation, the user equipment sends the capability information thereof to the network device, and the capability information includes the cycle which is recommended by the user equipment and in which the WUS is detected. In a scenario that the user equipment receives a plurality of kinds of indication information, it is determined whether all the WUS cycles indicated by the plurality of kinds of indication information include the cycle which is recommended and in which the WUS is detected. If all the WUS cycles indicated by the plurality of kinds of indication information include the cycle which is recommended and in which the WUS is detected, it is determined that the cycle in which the WUS is detected is the cycle which is recommended by the user equipment and in which the WUS is detected, i.e., the WUS cycle indicated by one of the plurality of kinds of indication information.

It should be noted that the user equipment can report the capability information thereof to the network device before receiving the plurality of kinds of indication information; or report the capability information thereof to the network device after receiving the plurality of kinds of indication information. In an implementation, an order of receiving the plurality of kinds of indication information and reporting the capability information thereof by the user equipment is not limited.

In the above-mentioned implementation, if the cycle which is recommended by the user equipment and in which the WUS is detected is included in all the WUS cycles indicated by the plurality of kinds of indication information, it is determined that the cycle which is recommended by the user equipment and in which the WUS is detected is the cycle in which the user equipment detects the WUS. Thus, when determining the cycle in which the WUS is detected, the present disclosure can not only follow a configuration of a network side, but also match the capability of the user equipment itself.

An embodiment of the present disclosure provides a method for determining a WUS cycle, which is applied to a user equipment. FIG 7 is a flowchart of a method for determining a WUS cycle shown according to an exemplary embodiment. As shown in FIG 7, the method includes the following steps.

At step 701, capability information of the user equipment is sent to a network device, in which the capability information includes a cycle which is recommended by the user equipment and in which a WUS is detected; and

At step 702, in response to the user equipment receiving N kinds of indication information, the cycle which is recommended by the user equipment being not included in the WUS cycles indicated by the N kinds of indication information, and a WUS cycle or WUS cycles indicated by at least one kind of indication information in the N kinds of indication information being longer than the cycle which is recommended by the user equipment, it is determined that the cycle in which the WUS is detected is a minimum value in the WUS cycle or WUS cycles indicated by the at least one kind of indication information;
in which the N kinds of indication information are all used for indicating WUS cycles, where N is a positive integer greater than 1.

In an implementation, the user equipment sends the capability information thereof to the network device, and the capability information includes the cycle which is recommended by the user equipment and in which the WUS is detected. In a scenario that the user equipment receives a plurality of kinds of indication information, it is determined whether all the WUS cycles indicated by the plurality of kinds of indication information include the cycle which is recommended and in which the WUS is detected. If all the WUS cycles indicated by the plurality of kinds of indication information do not include the cycle which is recommended and in which the WUS is detected, but at least one of all the WUS cycles indicated by the plurality of kinds of indication information is longer than the cycle recommended by the user equipment, it is determined that the cycle in which the user equipment detects the WUS is the minimum value of the above-mentioned at least one WUS cycle.

It should be noted that the user equipment can report the capability information thereof to the network device before receiving the plurality of kinds of indication information; or report the capability information thereof to the network device after receiving the plurality of kinds of indication information. In an implementation, an order of receiving the plurality of kinds of indication information and reporting the capability information thereof by the user equipment is not limited.

In the above-mentioned implementation, if the cycle which is recommended by the user equipment and in which the WUS is detected is not included in all the WUS cycles indicated by the plurality of kinds of indication information, but there is a WUS cycle or WUS cycles longer than the recommended cycle in all the WUS cycles indicated by the plurality of kinds of indication information, it is determined that the cycle in which the user equipment detects the WUS is the minimum value in the WUS cycle or WUS cycles longer than the recommended cycle, thus, matching with the capability of the user equipment itself as much as possible while shortening a delay of information transmission.

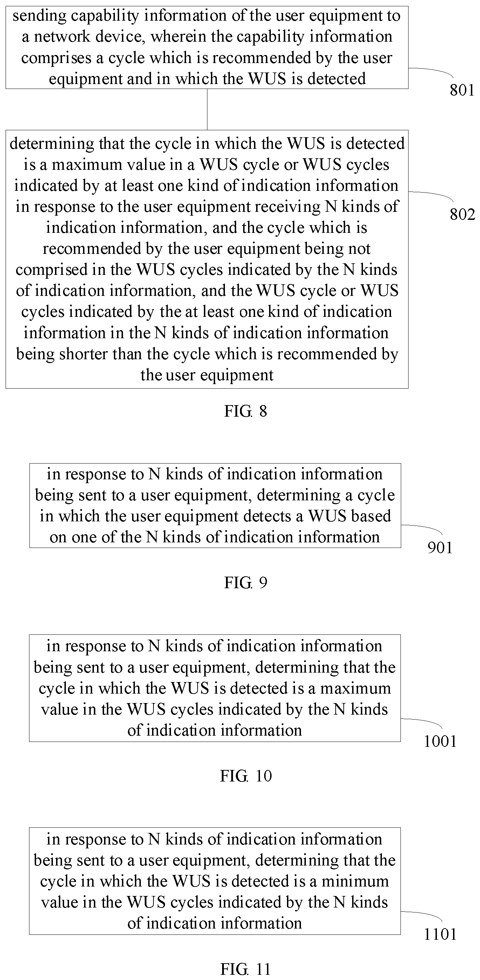

An embodiment of the present disclosure provides a method for determining a WUS cycle, which is applied to a user equipment. FIG 8 is a flowchart of a method for determining a WUS cycle shown according to an exemplary embodiment. As shown in FIG 8, the method includes the following steps.

At step 801, capability information of the user equipment is sent to a network device, in which the capability information includes a cycle which is recommended by the user equipment and in which a WUS is detected.

At step 802, in response to the user equipment receiving N kinds of indication information, the cycle which is recommended by the user equipment being not included in the WUS cycles indicated by the N kinds of indication information, and a WUS cycle or WUS cycles indicated by at least one kind of indication information in the N kinds of indication information being shorter than the cycle which is recommended by the user equipment, it is determined that the cycle in which the WUS is detected is a maximum value in the WUS cycle or WUS cycles indicated by the at least one kind of indication information;
in which the N kinds of indication information are all used for indicating WUS cycles, where N is a positive integer greater than 1.

In an implementation, the user equipment sends the capability information thereof to the network device, and the capability information includes the cycle which is recommended by the user equipment and in which the WUS is detected. In a scenario that the user equipment receives a plurality of kinds of indication information, it is determined whether all the WUS cycles indicated by the plurality of kinds of indication information include the cycle which is recommended and in which the WUS is detected. If all the WUS cycles indicated by the plurality of kinds of indication information do not include the cycle which is recommended and in which the WUS is detected, but at least one of all the WUS cycles indicated by the plurality of kinds of indication information is shorter than the cycle recommended by the user equipment, it is determined that the cycle in which the user equipment detects the WUS is the maximum value of the above-mentioned at least one WUS cycle.

It should be noted that the user equipment can report the capability information thereof to the network device before receiving the plurality of kinds of indication information; or report the capability information thereof to the network device after receiving the plurality of kinds of indication information. In an implementation, an order of receiving the plurality of kinds of indication information and reporting the capability information thereof by the user equipment is not limited.

In the above-mentioned implementation, if the cycle which is recommended by the user equipment and in which the WUS is detected is not included in all the WUS cycles indicated by the plurality of kinds of indication information, but there is a WUS cycle or WUS cycles shorter than the recommended cycle in all the WUS cycles indicated by the plurality of kinds of indication information, it is determined that the cycle in which the user equipment detects the WUS is the maximum value in the WUS cycle or WUS cycles shorter than the recommended cycle, thus, matching the capability of the user equipment itself as much as possible while reducing energy consumption of the user equipment.

An embodiment of the present disclosure provides a method for determining a WUS cycle, which is applied to a user equipment. The method includes:
in response to the user equipment receiving N kinds of indication information, determining a cycle in which the user equipment detects a WUS based on one of the N kinds of indication information;
in which the N kinds of indication information are all used for indicating WUS cycles, where N is a positive integer greater than 1;
the N kinds of indication information include at least two kinds of:
   indication information transmitted by a network device through a system broadcast message and used for configured WUS cycles;
   indication information transmitted by a network device through a user equipment specific signaling and used for configured WUS cycles; or
   indication information used for WUS cycles configured by a core network.

In an implementation, in a scenario that the user equipment receives a plurality of kinds of indication information, the cycle in which the user equipment detects the WUS is determined based on one of the plurality of kinds of indication information. Each of the plurality of kinds of indication information indicates the WUS cycle. The WUS cycles indicated by the plurality of kinds of indication information can be the same or different. The plurality of kinds of indication information include at least two kinds of:
the indication information transmitted by the network device through the system broadcast message and used for the configured WUS cycles;
the indication information transmitted by the network device through the user equipment special signaling and used for the configured WUS cycles; or
the indication information used for the WUS cycles configured by the core network.

Illustratively, the indication information used for the WUS cycles configured by the core network can be transmitted through a Non-Access Stratum (NAS) signaling.

In an implementation, in a scenario that the user equipment receives a plurality of kinds of indication information, the user equipment determines one of the plurality of kinds of indication information based on priorities of the indication information. That is, the user equipment determines the cycle in which the user equipment detects the WUS based on a WUS cycle indicated by indication information having a highest priority in the plurality of kinds of indication information. The priorities of the plurality of kinds of above-mentioned indication information follow a following order from high to low: the indication information transmitted by the network device through the user equipment specific signaling and used for the configured WUS cycles, the indication information used for the WUS cycles configured by the core network, and the indication information transmitted by the network device through the system broadcast message and used for the configured WUS cycles.

In an implementation, in a scenario that the user equipment receives the plurality of kinds of indication information, if the user equipment is configured with the WUS cycles through the user equipment specific signaling, a cycle in which the user equipment monitors the WUS is determined based on the WUS cycles configured through the user equipment specific signaling.

In an implementation, in a scenario that the user equipment receives the plurality of kinds of indication information, if the user equipment is configured with the WUS cycles through the NAS signaling, and is not configured with the WUS cycles through the user equipment specific signaling, a cycle in which the user equipment monitors the WUS is determined based on the WUS cycles configured through the NAS signaling.

In the above-mentioned implementations, when the user equipment receives the plurality of kinds of indication information, it is determined that one of the WUS cycles indicated by the plurality of kinds of indication information is the cycle in which the user equipment detects the WUS. It is ensured that the user equipment can detect the WUS normally.

An embodiment of the present disclosure provides a method for determining a WUS cycle, which is applied to a network device. FIG 9 is a flowchart of a method for determining a WUS cycle shown according to an exemplary embodiment. As shown in FIG 9, the method includes the following step.

At step 901, in response to N kinds of indication information being sent to a user equipment, a cycle in which the user equipment detects a WUS is determined based on one of the N kinds of indication information;
in which the N kinds of indication information are all used for indicating WUS cycles, where N is a positive integer greater than 1.

In an implementation, in a scenario that a plurality of kinds of indication information are sent to the user equipment, the network device determines the cycle in which the user equipment detects the WUS based on one of the N kinds of indication information. Each of the plurality of kinds of indication information indicates the WUS cycle. In this case, the network device sends the WUS to the user equipment according to the cycle determined in the above-mentioned manner. The WUS cycles indicated by the plurality of kinds of indication information can be the same or different.

Illustratively, the indication information described herein can indicate the WUS cycles configured by the network device or the WUS cycles configured by the core network.

In the above-mentioned implementation, when the plurality of kinds of indication information are sent to the user equipment, the network device determines that one of the WUS cycles indicated by the plurality of kinds of indication information is the cycle in which the user equipment detects the WUS. The network device determines the cycle in which the user equipment detects the WUS in a manner which is the same as that adopted by the user equipment. Thus, the network device sends the WUS according to the cycle determined above, and the user equipment detects the WUS according to the determined same cycle.

An embodiment of the present disclosure provides a method for determining a WUS cycle, which is applied to a network device. FIG 10 is a flowchart of a method for determining a WUS cycle shown according to an exemplary embodiment. As shown in FIG 10, the method includes the following step.

At step 1001, in response to N kinds of indication information being sent to a user equipment, it is determined that the cycle in which the WUS is detected is a maximum value in the WUS cycles indicated by the N kinds of indication information;
in which the N kinds of indication information are all used for indicating WUS cycles, where N is a positive integer greater than 1.

In an implementation, in a scenario that a plurality of kinds of indication information are sent to the user equipment, the network device determines that the cycle in which the user equipment detects the WUS is the maximum value in the WUS cycles indicated by the plurality of kinds of indication information. In such a case, the network device sends the WUS to the user equipment according to the cycle determined in the above-mentioned manner. When WUS cycles indicated by at least two kinds of indication information are the same, there may be a situation that the WUS cycles indicated by the at least two kinds of indication information are the maximum value, at this point, the cycle in which the user equipment detects the WUS can be determined based on one of the at least two kinds of indication information.

In the above-mentioned implementation, when the plurality of kinds of indication information are sent to the user equipment, it is determined that the maximum value in the WUS cycles indicated by the plurality of kinds of indication information is the cycle in which the user equipment detects the WUS, that is, a WUS cycle which is long as much as possible is selected, by which energy consumption of the user equipment can be reduced as much as possible.

An embodiment of the present disclosure provides a method for determining a WUS cycle, which is applied to a network device. FIG 11 is a flowchart of a method for determining a WUS cycle shown according to an exemplary embodiment. As shown in FIG 11, the method includes the following step.

At step 1101, in response to N kinds of indication information being sent to a user equipment, it is determined that the cycle in which the WUS is detected is a minimum value in the WUS cycles indicated by the N kinds of indication information;
in which the N kinds of indication information are all used for indicating WUS cycles, where N is a positive integer greater than 1.

In an implementation, in a scenario that a plurality of kinds of indication information are sent to the user equipment, the network device determines that the cycle in which the user equipment detects the WUS is the minimum value in the WUS cycles indicated by the plurality of kinds of indication information. In such a case, the network device sends the WUS to the user equipment according to the cycle determined in the above-mentioned manner. When WUS cycles indicated by at least two kinds of indication information are the same, there may be a situation that the WUS cycles indicated by the at least two kinds of indication information are the minimum value, at this point, the cycle in which the user equipment detects the WUS is determined based on one of the at least two kinds of indication information.

In the above-mentioned implementation, when the plurality of kinds of indication information are sent to the user equipment, it is determined that the minimum value in the WUS cycles indicated by the plurality of kinds of indication information is the cycle in which the user equipment detects the WUS, that is, a WUS cycle which is short as much as possible is selected, by which a delay of information transmission can be shortened as much as possible.

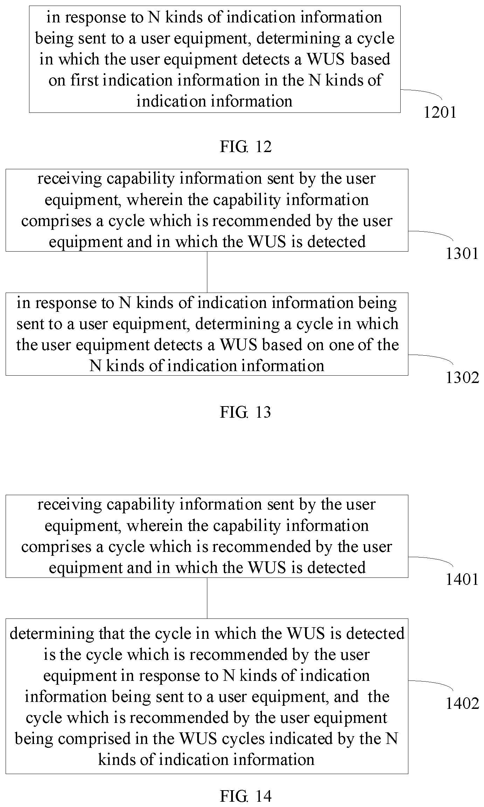

An embodiment of the present disclosure provides a method for determining a WUS cycle, which is applied to a network device. FIG 12 is a flowchart of a method for determining a WUS cycle shown according to an exemplary embodiment. As shown in FIG 12, the method includes the following step.

At step 1201, in response to N kinds of indication information being sent to a user equipment, the cycle in which the WUS is detected is determined based on first indication information in the N kinds of indication information;
in which the first indication information is indication information having a highest priority in the N kinds of indication information, the N kinds of indication information are all used for indicating WUS cycles, where N is a positive integer greater than 1.

In an implementation, in a scenario that a plurality of kinds of indication information are sent to the user equipment, the network device determines the first indication information in the plurality of kinds of indication information, and determines the cycle in which the user equipment detects the WUS based on the first indication information. The plurality of kinds of indication information indicates WUS cycles, and in the plurality of kinds of indication information, a priority of the first indication information is highest.

Illustratively, the plurality of kinds of indication information can include at least two kinds of indication information of: indication information transmitted by a network device through a system broadcast message and used for configured WUS cycles; indication information transmitted by a network device through a user equipment specific signaling and used for configured WUS cycles; and indication information used for WUS cycles configured by a core network. Further illustratively, the first indication information can be determined based on priorities of the indication information listed as above.

In the above-mentioned implementation, when the plurality of kinds of indication information are sent to the user equipment, the network device determines the cycle in which the user equipment detects the WUS based on the indication information having the highest priority. The user equipment can detect the WUS according to a configuration preferred by a network side.

An embodiment of the present disclosure provides a method for determining a WUS cycle, which is applied to a network device. FIG 13 is a flowchart of a method for determining a WUS cycle shown according to an exemplary embodiment. As shown in FIG 13, the method includes the following steps.

At step 1301, capability information sent by a user equipment is received, in which the capability information includes a cycle which is recommended by the user equipment and in which the WUS is detected.

At step 1302, in response to N kinds of indication information being sent to the user equipment, a cycle in which the user equipment detects a WUS is determined based on one of the N kinds of indication information;
in which the N kinds of indication information are all used for indicating WUS cycles, where N is a positive integer greater than 1.

In an implementation, the network device receives the capability information thereof sent by the user equipment, and the capability information includes the cycle which is recommended by the user equipment and in which the WUS is detected. In a scenario that a plurality of kinds of indication information are sent to the user equipment, the network device determines the cycle in which the user equipment detects the WUS based on one of the N kinds of indication information. Illustratively, the cycle which is recommended by the user equipment and in which the WUS is detected is 32 frames.

It should be noted that the network device can receive the capability information thereof reported by the user equipment before sending the plurality of kinds of indication information to the user equipment; or receive the capability information thereof reported by the user equipment after sending the plurality of kinds of indication information to the user equipment. In this implementation, an order of sending the plurality of kinds of indication information and receiving the capability information thereof reported by the user equipment is not limited.

In the above-mentioned implementation, in a case that the plurality of kinds of indication information are sent to the user equipment and the cycle reported by the user equipment which is recommended in which the WUS is detected is received, on the basis of referring to the cycle which is recommended by the user equipment and in which the WUS is detected, the cycle in which the user equipment detects the WUS is determined based on one of the plurality of kinds of indication information. The capability of the user equipment itself can be referenced when the cycle in which the WUS is detected is determined, thus the determined WUS cycle is matched with the capability of the user equipment as much as possible.

An embodiment of the present disclosure provides a method for determining a WUS cycle, which is applied to a network device. FIG 14 is a flowchart of a method for determining a WUS cycle shown according to an exemplary embodiment. As shown in FIG 14, the method includes the following steps.

At step 1401, capability information sent by a user equipment is received, in which the capability information includes a cycle which is recommended by the user equipment and in which the WUS is detected.

At step 1402, in response to N kinds of indication information being sent to the user equipment and the cycle which is recommended by the user equipment being included in the WUS cycles indicated by the N kinds of indication information, it is determined that the cycle in which the WUS is detected is the cycle which is recommended by the user equipment;
in which the N kinds of indication information are all used for indicating WUS cycles, where N is a positive integer greater than 1.

In an implementation, the network device receives the capability information thereof sent by the user equipment, and the capability information includes the cycle which is recommended by the user equipment and in which the WUS is detected. In a scenario that a plurality of kinds of indication information are sent to the user equipment, it is determined whether all the WUS cycles indicated by the plurality of kinds of indication information include the cycle which is recommended by the user equipment and in which the WUS is detected. If all the WUS cycles indicated by the plurality of kinds of indication information include the cycle which is recommended by the user equipment and in which the WUS is detected, the network device determines that the cycle in which the user equipment detects the WUS is the cycle which is recommended by the user equipment and in which the WUS is detected, i.e., the WUS cycle indicated by one of the plurality of kinds of indication information.

It should be noted that the network device can receive the capability information thereof reported by the user equipment before sending the plurality of kinds of indication information to the user equipment; or receive the capability information thereof reported by the user equipment after sending the plurality of kinds of indication information to the user equipment. In the implementation, an order of sending the plurality of kinds of indication information and receiving the capability information thereof reported by the user equipment is not limited.

In the above-mentioned implementation, if the cycle which is recommended by the user equipment and in which the WUS is detected is included in all the WUS cycles indicated by the plurality of kinds of indication information, the network device determines that the cycle which is recommended by the user equipment and in which the WUS is detected is the cycle in which the user equipment detects the WUS, and sends the WUS based on the determined cycle. Thus, when determining the cycle in which the WUS is detected, the present disclosure can not only follow a configuration of a network side be followed, but also match the capability of the user equipment itself.

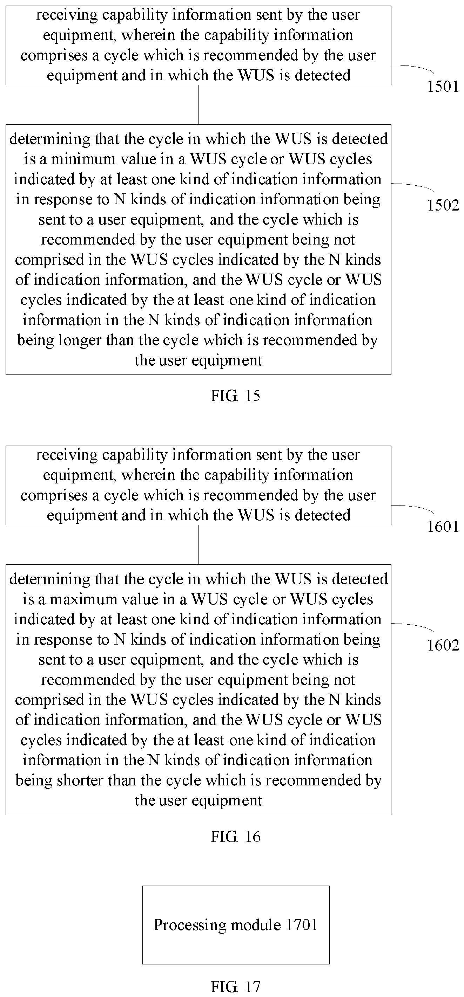

An embodiment of the present disclosure provides a method for determining a WUS cycle, which is applied to a network device. FIG 15 is a flowchart of a method for determining a WUS cycle shown according to an exemplary embodiment. As shown in FIG 15, the method includes the following steps.

At step 1501, capability information sent by a user equipment is received, in which the capability information includes a cycle which is recommended by the user equipment and in which the WUS is detected.

At step 1502, in response to N kinds of indication information being sent to the user equipment, the cycle which is recommended by the user equipment being not included in the WUS cycles indicated by the N kinds of indication information, and a WUS cycle or WUS cycles indicated by at least one kind of indication information in the N kinds of indication information being longer than the cycle which is recommended by the user equipment, it is determined that the cycle in which the WUS is detected is a minimum value in the WUS cycle or WUS cycles indicated by the at least one kind of indication information;
in which the N kinds of indication information are all used for indicating WUS cycles, where N is a positive integer greater than 1.

In an implementation, the network device receives the capability information thereof sent by the user equipment, and the capability information includes the cycle which is recommended by the user equipment and in which the WUS is detected. In a scenario that a plurality of kinds of indication information are sent to the user equipment, it is determined whether all the WUS cycles indicated by the plurality of kinds of indication information include the cycle which is recommended by the user equipment and in which the WUS is detected. If all the WUS cycles indicated by the plurality of kinds of indication information do not include the cycle which is recommended by the user equipment and in which the WUS is detected, but at least one of all the WUS cycles indicated by the plurality of kinds of indication information is longer than the cycle recommended by the user equipment, the network device determines that the cycle in which the user equipment detects the WUS is the minimum value of the above-mentioned at least one WUS cycle.

It should be noted that the network device can receive the capability information thereof reported by the user equipment before sending the plurality of kinds of indication information to the user equipment; or receive the capability information thereof reported by the user equipment after sending the plurality of kinds of indication information to the user equipment. In an implementation, an order of sending the plurality of kinds of indication information and receiving the capability information thereof reported by the user equipment is not limited.

In the above-mentioned implementation, if the cycle which is recommended by the user equipment and in which the WUS is detected is not included in all the WUS cycles indicated by the plurality of kinds of indication information, but there is a WUS cycle or WUS cycles longer than the recommended cycle in all the WUS cycles indicated by the plurality of kinds of indication information, the network device determines that the cycle in which the user equipment detects the WUS is the minimum value in the WUS cycle or WUS cycles longer than the recommended cycle, thus, matching with the capability of the user equipment itself as much as possible while shortening a delay of information transmission.

An embodiment of the present disclosure provides a method for determining a WUS cycle, which is applied to a network device. FIG 16 is a flowchart of a method for determining a WUS cycle shown according to an exemplary embodiment. As shown in FIG 16, the method includes the following steps.

At step 1601, capability information sent by a user equipment is received, in which the capability information includes a cycle which is recommended by the user equipment and in which the WUS is detected; and

At step 1602, in response to N kinds of indication information being sent to the user equipment, the cycle which is recommended by the user equipment being not included in the WUS cycles indicated by the N kinds of indication information, and a WUS cycle or WUS cycles indicated by at least one kind of indication information in the N kinds of indication information being shorter than the cycle which is recommended by the user equipment, it is determined that the cycle in which the WUS is detected is a maximum value in the WUS cycle or WUS cycles indicated by the at least one kind of indication information;
in which the N kinds of indication information are all used for indicating WUS cycles, where N is a positive integer greater than 1.

In an implementation, the network device receives the capability information thereof sent by the user equipment, and the capability information includes the cycle which is recommended by the user equipment and in which the WUS is detected. In a scenario that a plurality of kinds of indication information are sent to the user equipment, it is determined whether all the WUS cycles indicated by the plurality of kinds of indication information include the cycle which is recommended by the user equipment and in which the WUS is detected. If all the WUS cycles indicated by the plurality of kinds of indication information do not include the cycle which is recommended by the user equipment and in which the WUS is detected, but at least one of all the WUS cycles indicated by the plurality of kinds of indication information is shorter than the cycle recommended by the user equipment, the network device determines that the cycle in which the user equipment detects the WUS is the maximum value of the above-mentioned at least one WUS cycle.

It should be noted that the network device can receive the capability information thereof reported by the user equipment before sending the plurality of kinds of indication information to the user equipment; or receive the capability information thereof reported by the user equipment after sending the plurality of kinds of indication information to the user equipment. In an implementation, an order of sending the plurality of kinds of indication information and receiving the capability information thereof reported by the user equipment is not limited.

In the above-mentioned implementation, if the cycle which is recommended by the user equipment and in which the WUS is detected is not included in all the WUS cycles indicated by the plurality of kinds of indication information, but there is a WUS cycle or WUS cycles smaller than the recommended cycle in all the WUS cycles indicated by the plurality of kinds of indication information, the network device determines that the cycle in which the user equipment detects the WUS is the maximum value in the WUS cycle or WUS cycles shorter than the recommended cycle, thus, matching the capability of the user equipment itself as much as possible while reducing energy consumption of the user equipment.

An embodiment of the present disclosure provides a method for determining a WUS cycle, which is applied to a network device. The method includes:
in response to N kinds of indication information being sent to a user equipment, determining a cycle in which the user equipment detects a WUS based on one of the N kinds of indication information;
in which the N kinds of indication information are all used for indicating WUS cycles, where N is a positive integer greater than 1;
and the N kinds of indication information include at least two kinds of:
   indication information transmitted by a network device through a system broadcast message and used for configured WUS cycles;
   indication information transmitted by a network device through a user equipment specific signaling and used for configured WUS cycles; or
   indication information used for WUS cycles configured by a core network.

In an implementation, in a scenario that a plurality of kinds of indication information are sent to the user equipment, the network device determines the cycle in which the user equipment detects the WUS based on one of the plurality of kinds of indication information. Each of the plurality of kinds of indication information indicates the WUS cycle. In such a case, the network device sends the WUS to the user equipment according to the cycle determined in the above-mentioned manner. The WUS cycles indicated by the plurality of kinds of indication information can be the same or different. The plurality of kinds of indication information include at least two kinds of:
the indication information transmitted by the network device through the system broadcast message and used for the configured WUS cycles;
the indication information transmitted by the network device through the user equipment special signaling and used for the configured WUS cycles; or
the indication information used for the WUS cycles configured by the core network.

Illustratively, the indication information used for the WUS cycles configured by the above-mentioned core network can be transmitted through an NAS signaling.

In an implementation, in a scenario that a plurality of kinds of indication information are sent to the user equipment, one of the plurality of kinds of indication information is determined based on priorities of the indication information, that is, the cycle in which the user equipment detects the WUS is determined based on a WUS cycle indicated by indication information having a highest priority in the plurality of kinds of indication information,. The priorities of the plurality of kinds of above-mentioned indication information follow a following order from high to low: the indication information transmitted by the network device through the user equipment specific signaling and used for the configured WUS cycles, the indication information used for the WUS cycles configured by the core network, and the indication information transmitted by the network device through the system broadcast message and used for the configured WUS cycles.

In an implementation, in a scenario that a plurality of kinds of indication information are sent to the user equipment, if the user equipment is configured with the WUS cycles through the user equipment specific signaling, a cycle in which the user equipment monitors the WUS is determined based on the WUS cycles configured through the user equipment specific signaling,.

In an implementation, in a scenario that a plurality of kinds of indication information are sent to the user equipment, if the user equipment is configured with the WUS cycles through the NAS signaling, and is not configured with the WUS cycles through the user equipment specific signaling, a cycle in which the user equipment monitors the WUS is determined based on the WUS cycles configured through the NAS signaling.

In the above-mentioned implementations, when the plurality of kinds of indication information are sent to the user equipment, the network device determines that one of the WUS cycles indicated by the plurality of kinds of indication information is the cycle in which the user equipment detects the WUS. The network device determines, in a manner which is the same as that adopted by the user equipment, the cycle in which the user equipment detects the WUS. Thus, the network device sends the WUS according to the cycle determined above, and the user equipment detects the WUS according to the determined same cycle.

An embodiment of the present disclosure provides an apparatus for determining a WUS cycle, which is applied to a user equipment. As shown in FIG 17, the apparatus includes:
a processing module 1701 configured to, in response to the user equipment receiving N kinds of indication information, determine a cycle in which the user equipment detects a WUS based on one of the N kinds of indication information;
in which the N kinds of indication information are all used for indicating WUS cycles, where N is a positive integer greater than 1.

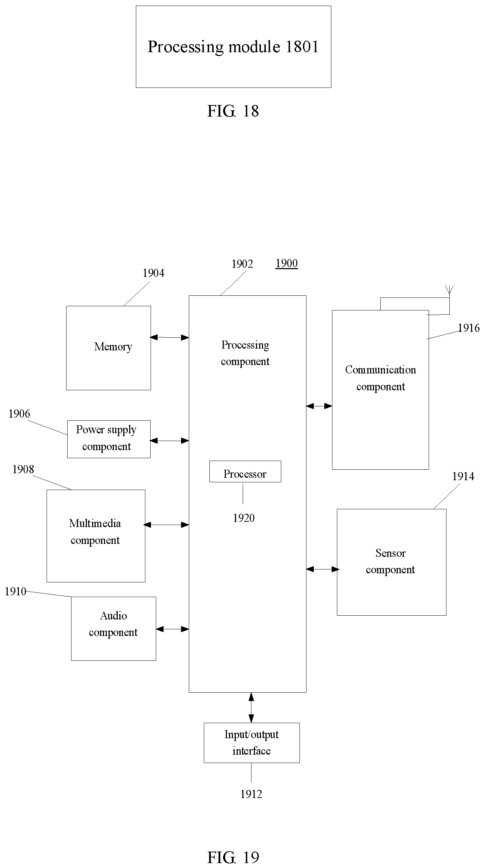

An embodiment of the present disclosure provides an apparatus for determining a WUS cycle, which is applied to a network device. As shown in FIG 18, the apparatus includes:
a processing module 1801 configured to, in response to N kinds of indication information being sent to a user equipment, determine a cycle in which the user equipment detects a WUS based on one of the N kinds of indication information;
in which the N kinds of indication information are all used for indicating WUS cycles, where N is a positive integer greater than 1.

An embodiment of the present disclosure provides a mobile terminal, including:
a processor; and
a memory configured to store executable instructions for the processor;
wherein the processor is configured to execute the executable instructions in the memory to implement steps of the above-mentioned method for determining the WUS cycle.

An embodiment of the present disclosure provides a network side device, including:
a processor; and
a memory configured to store executable instructions for the processor;
wherein the processor is configured to execute the executable instructions in the memory to implement steps of the above-mentioned method for determining the WUS cycle.

An embodiment of the present disclosure provides a non-temporary computer-readable storage medium, having executable instructions stored thereon, and the executable instructions, when executed by a processor, implementing steps of the above-mentioned method for determining the WUS cycle.

FIG 19 is a block diagram of an apparatus 1900 for determining a WUS cycle shown according to an exemplary embodiment. For example, the apparatus 1900 can be a mobile phone, a computer, a digital broadcast terminal, a message transceiving device, a game console, a tablet device, a medical device, a fitness equipment, a personal digital assistant, etc.

Referring to FIG 19, the apparatus 1900 can include one or more of the following components: a processing component 1902, a memory 1904, a power supply component 1906, a multimedia component 1908, an audio component 1910, an input/output (I/O) interface 1912, a sensor component 1914, and a communication component 1916.

The processing component 1902 generally controls the overall operation of the apparatus 1900, such as an operation related to display, telephone calling, data communication, camera operation and recording operation. The processing component 1902 can include one or more processors 1920 to execute instructions so as to complete all or parts of steps of the above-mentioned method. In addition, the processing component 1902 can include one or more modules which facilitate interaction between the processing component 1902 and other components. For example, the processing component 1902 can include a multimedia module to facilitate interaction between the multimedia component 1908 and the processing component 1902.

The memory 1904 is configured to store various types of data so as to support operations on the apparatus 1900. Examples of the data include instructions for any application or method operated on the apparatus 1900, contact data, telephone book data, messages, pictures, videos, etc. The memory 1904 can be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 1906 provides power for the various components of the apparatus 1900. The power supply component 1906 can include a power management system, one or more power supplies, and other components related to the generation, management and power distribution of the apparatus 1900.

The multimedia component 1908 includes a screen providing an output interface between the apparatus 1900 and a user. In some embodiments, the screen can include a liquid crystal display (LCD) and a touch panel (TP). If the screen includes the touch panel, the screen can be implemented as a touch screen to receive an input signal from the user. The touch panel includes one or more touch sensors to sense touching, sliding and gestures on the touch panel. The touch sensors can not only sense a boundary of a touching or sliding action, but also detect a duration and a pressure which are related to the touching or sliding operation. In some embodiments, the multimedia component 1908 includes a front camera and/or a rear camera. When the apparatus 1900 is in an operation mode, such as a shooting mode or a video mode, the front camera and/or the rear camera can receive external multimedia data. Each of the front camera and the rear camera can be a fixed optical lens system or have a focal length and optical zooming ability.

The audio component 1910 is configured to output and/input an audio signal. For example, the audio component 1910 includes a microphone (MIC). When the apparatus 1900 is in an operation mode, such as a calling mode, a recording mode and a voice recognition mode, the MIC is configured to receive an external audio signal. The received audio signal can be further stored in the memory 1904 or sent by the communication component 1916. In some embodiments, the audio component 1910 further includes a loudspeaker for outputting an audio signal.

The I/O interface 1912 is an interface provided between the processing component 1902 and a peripheral interface module, and the above-mentioned peripheral interface module can be a keyboard, a click wheel, buttons, etc. These buttons can include, but are not limited to a home button, a volume button, a start button and a lock button.

The sensor component 1914 includes one or more sensors for providing various aspects of state evaluation for the apparatus 1900. For example, the sensor component 1914 can detect an on/off state of the apparatus 1900 and relative locations of the components, for example, the components are a display and a keypad of the apparatus 1900. The sensor component 1914 can also detect position change of the apparatus 1900 or one component of the apparatus 1900, the existence or inexistence of contact between a user and the apparatus 1900, a direction or acceleration/deceleration of the apparatus 1900, and the temperature change of the apparatus 1900. The sensor component 1914 can include a proximity sensor configured to detect the existence of nearby objects when there is no any physical contact. The sensor component 1914 can further include an optical sensor, such as a CMOS or CCD image sensor, used in imaging applications. In some embodiments, the sensor component 1914 can further include an acceleration sensor, a gyroscope sensor, a magnetic sensor, a pressure sensor or a temperature sensor.

The communication component 1916 is configured to facilitate wired or wireless communication between the apparatus 1900 and other devices. The apparatus 1900 can be accessed to a wireless network based on a communication standard, such as WiFi, 2G or 3G, or combinations thereof. In an exemplary embodiment, the communication component 1916 receives a broadcast signal or broadcast-related information from an external broadcast management system through a broadcast channel. In an exemplary embodiment, the communication component 1916 further includes a near field communication (NFC) module to promote short-range communication. For example, the NFC module can be implemented on the basis of a radio frequency identification (RFID) technology, an infrared data association (IrDA) technology, an ultra-wide band (UWB) technology, a Bluetooth (BT) technology, and other technologies.

In an exemplary embodiment, the apparatus 1900 can be implemented by one or more application specific integrated circuits (ASIC), digital signal processors (DSP), digital signal processing devices (DSPD), programmable logic devices (PLD), field-programmable gate arrays (FPGA), controllers, micro-controllers, microprocessors or other electronic elements, and is used for executing the above-mentioned method.

In an exemplary embodiment, further provided is a non-temporary computer-readable storage medium including instruction, such as a memory 1904 including instructions, and the above-mentioned instructions can be executed by the processor 1920 of the apparatus 1900 so as to complete the above-mentioned method. For example, the non-temporary computer-readable storage medium can be an ROM, a random access memory (RAM), a CD-ROM, a cassette, a floppy disk, an optical data storage device, etc.

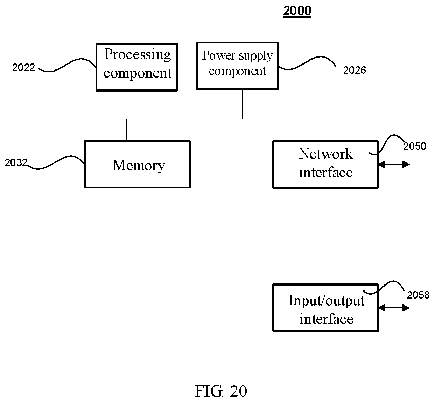

FIG 20 is a block diagram of an apparatus 2000 for determining a WUS cycle shown according to an exemplary embodiment. For example, the apparatus 200 can be provided as a base station. Refer to FIG 20, the apparatus 2000 includes a processing component 2022 which further includes one or more processors and a memory resource represented by a memory 2032 and used for storing instructions, such as applications, which can be executed by the processing component 2022. The applications stored in the memory 2032 can include one or more modules with each corresponding to a set of instructions. In addition, the processing component 2022 is configured to execute the instructions so that the above-mentioned access method for an unauthorized channel is executed.

The apparatus 2000 can further include a power supply component 2026 configured to execute power supply management for the apparatus 2000, a wired or wireless network interface 2050 configured to connect the apparatus 2000 to a network, and an input/output (I/O) interface 2059. The apparatus 2000 can be based on an operating system, such as Windows ServerTM, Mac OS XTM, UnixTM, LinuxTM, FreeBSDTM or the like, stored in the memory 2032.

Other implementation solutions in the embodiments of the present disclosure will be readily envisioned by those skilled in the art after considering the specification and putting the present disclosure disclosed herein into practice. The present application aims at covering any variations, purposes or adaptive changes of the present disclosure, and these variations, purposes or adaptive changes conform to general principles of the embodiments of the present disclosure and include common general knowledge or conventional technical means in the undisclosed technical field of the present disclosure. The specification and the embodiments are only regarded to be exemplary, and the true scope and spirits of the embodiments of the present disclosure are appointed by the following claims.

It should be understood that the embodiments of the present disclosure are not limited to precise structures which have been described above and shown in the accompanying drawings, and various modifications and alterations may be made without departing from the scope thereof. The scope of the embodiments of the present disclosure is only limited by the appended claims.

### Industrial applicability

By using the method in an embodiment of the present disclosure, when receiving a plurality of kinds of indication information, a user equipment determines that one of WUS cycles indicated by the plurality of kinds of indication information is a cycle in which the user equipment detects a WUS. It is ensured that the user equipment can detect the WUS normally.

## Claims

1. A method for determining a wake up signal (WUS) cycle, performed by a user equipment, comprising:
in response to the user equipment receiving N kinds of indication information, determining a cycle in which the user equipment detects a WUS based on one of the N kinds of indication information;
wherein the N kinds of indication information are all used for indicating WUS cycles, where N is a positive integer greater than 1.

2. The method according to claim 1, wherein determining the cycle in which the user equipment detects the WUS based on one of the N kinds of indication information comprises:
determining that the cycle in which the WUS is detected is a maximum value in the WUS cycles indicated by the N kinds of indication information.

3. The method according to claim 1, wherein determining the cycle in which the user equipment detects the WUS based on one of the N kinds of indication information comprises:
determining that the cycle in which the WUS is detected is a minimum value in the WUS cycles indicated by the N kinds of indication information.

4. The method according to claim 1, wherein determining the cycle in which the user equipment detects the WUS based on one of the N kinds of indication information comprises:
determining the cycle in which the WUS is detected based on first indication information in the N kinds of indication information;
wherein the first indication information is indication information having a highest priority in the N kinds of indication information.

5. The method according to claim 1, further comprising:
sending capability information of the user equipment to a network device, wherein the capability information comprises a cycle which is recommended by the user equipment and in which the WUS is detected.

6. The method according to claim 5, wherein determining the cycle in which the user equipment detects the WUS based on one of the N kinds of indication information comprises:
determining that the cycle in which the WUS is detected is the cycle which is recommended by the user equipment in response to the cycle which is recommended by the user equipment being comprised in the WUS cycles indicated by the N kinds of indication information.

7. The method according to claim 5, wherein determining the cycle in which the user equipment detects the WUS based on one of the N kinds of indication information comprises:
determining that the cycle in which the WUS is detected is a minimum value in a WUS cycle or WUS cycles indicated by at least one kind of indication information in response to the cycle which is recommended by the user equipment being not comprised in the WUS cycles indicated by the N kinds of indication information, and the WUS cycle or WUS cycles indicated by the at least one kind of indication information in the N kinds of indication information being longer than the cycle which is recommended by the user equipment.

8. The method according to claim 5, wherein determining the cycle in which the user equipment detects the WUS based on one of the N kinds of indication information comprises:
determining that the cycle in which the WUS is detected is a maximum value in a WUS cycle or WUS cycles indicated by at least one kind of indication information in response to the cycle which is recommended by the user equipment being not comprised in the WUS cycles indicated by the N kinds of indication information, and the WUS cycle or WUS cycles indicated by the at least one kind of indication information in the N kinds of indication information being shorter than the cycle which is recommended by the user equipment.

9. The method according to claim 1, wherein the N kinds of indication information comprise at least two kinds of:
indication information transmitted by a network device through a system broadcast message and used for configured WUS cycles;
indication information transmitted by a network device through a user equipment specific signaling and used for configured WUS cycles; or
indication information used for WUS cycles configured by a core network.

10. The method according to claim 9, wherein priorities of the N kinds of indication information follow a following order from high to low: the indication information transmitted by the network device through the user equipment specific signaling and used for the configured WUS cycles, the indication information used for the WUS cycles configured by the core network, and the indication information transmitted by the network device through the system broadcast message and used for the configured WUS cycles.

11. A method for determining a wake up signal (WUS) cycle, performed by a network device, comprising:
in response to N kinds of indication information being sent to a user equipment, determining a cycle in which the user equipment detects a WUS based on one of the N kinds of indication information;
wherein the N kinds of indication information are all used for indicating WUS cycles, where N is a positive integer greater than 1.

12. The method according to claim 11, wherein determining the cycle in which the user equipment detects the WUS based on one of the N kinds of indication information comprises:
determining that the cycle in which the WUS is detected is a maximum value in the WUS cycles indicated by the N kinds of indication information.

13. The method according to claim 11, wherein determining the cycle in which the user equipment detects the WUS based on one of the N kinds of indication information comprises:
determining that the cycle in which the WUS is detected is a minimum value in the WUS cycles indicated by the N kinds of indication information.

14. The method according to claim 11, wherein determining the cycle in which the user equipment detects the WUS based on one of the N kinds of indication information comprises:
determining the cycle in which the WUS is detected based on first indication information in the N kinds of indication information;
wherein the first indication information is indication information having a highest priority in the N kinds of indication information.

15. The method according to claim 11, further comprising:
receiving capability information sent by the user equipment, wherein the capability information comprises a cycle which is recommended by the user equipment and in which the WUS is detected.

16. The method according to claim 15, wherein determining the cycle in which the user equipment detects the WUS based on one of the N kinds of indication information comprises:
determining that the cycle in which the WUS is detected is the cycle which is recommended by the user equipment in response to the cycle which is recommended by the user equipment being comprised in the WUS cycles indicated by the N kinds of indication information.

17. The method according to claim 15, wherein determining the cycle in which the user equipment detects the WUS based on one of the N kinds of indication information comprises:
determining that the cycle in which the WUS is detected is a minimum value in a WUS cycle or WUS cycles indicated by at least one kind of indication information in response to the cycle which is recommended by the user equipment being not comprised in the WUS cycles indicated by the N kinds of indication information, and the WUS cycle or WUS cycles indicated by the at least one kind of indication information in the N kinds of indication information being longer than the cycle which is recommended by the user equipment.

18. The method according to claim 15, wherein determining the cycle in which the user equipment detects the WUS based on one of the N kinds of indication information comprises:
determining that the cycle in which the WUS is detected is a maximum value in a WUS cycle or WUS cycles indicated by at least one kind of indication information in response to the cycle which is recommended by the user equipment being not comprised in the WUS cycles indicated by the N kinds of indication information, and the WUS cycle or WUS cycles indicated by the at least one kind of indication information in the N kinds of indication information being shorter than the cycle which is recommended by the user equipment.

19. The method according to claim 11, wherein the N kinds of indication information comprise at least two kinds of:
indication information transmitted by a network device through a system broadcast message and used for configured WUS cycles;
indication information transmitted by a network device through a user equipment specific signaling and used for configured WUS cycles; or
indication information used for WUS cycles configured by a core network.

20. The method according to claim 19, wherein priorities of the N kinds of indication information follow a following order from high to low: the indication information transmitted by the network device through the user equipment specific signaling and used for the configured WUS cycles, the indication information used for the WUS cycles configured by the core network, and the indication information transmitted by the network device through the system broadcast message and used for the configured WUS cycles.

21. An apparatus for determining a wake up signal (WUS) cycle, applied to a user equipment, comprising:
a processing module configured to, in response to the user equipment receiving N kinds of indication information, determine a cycle in which the user equipment detects a WUS based on one of the N kinds of indication information;
wherein the N kinds of indication information are all used for indicating WUS cycles, where N is a positive integer greater than 1.

22. An apparatus for determining a wake up signal (WUS) cycle, applied to a network device, comprising:
a processing module configured to, in response to N kinds of indication information being sent to a user equipment, determine a cycle in which the user equipment detects a WUS based on one of the N kinds of indication information;
wherein the N kinds of indication information are all used for indicating WUS cycles, where N is a positive integer greater than 1.

23. A mobile terminal, comprising:
a processor; and
a memory configured to store executable instructions for the processor;
wherein the processor is configured to execute the executable instructions in the memory, to implement steps of the method for determining the WUS cycle according to any one of claims 1 to 10.

24. A network side device, comprising:
a processor; and
a memory configured to store executable instructions for the processor;
wherein the processor is configured to execute the executable instructions in the memory, to implement steps of the method for determining the WUS cycle according to any one of claims 11 to 20.

25. A non-temporary computer-readable storage medium, having executable instructions stored thereon, and the executable instructions, when executed by a processor, implementing steps of the method for determining the WUS cycle according to any one of claims 1 to 10 or steps of the method for determining the WUS cycle according to any one of claims 11 to 20.
